# EUROPÄISCHE PATENTANMELDUNG

(11) **EP 3 604 753 A1**
(43) Veröffentlichungstag der Anmeldung: **05.02.2020**
(21) Anmeldenummer: 19184922.3
(22) Anmeldetag: 08.07.2019
(51) Int. Cl.: F01N 3/20, F01N 9/00, F01N 11/00, F01N 13/00

(54) **VERFAHREN ZUM BETREIBEN EINES SCR-SYSTEMS IM STÖRFALL**

(30) Priorität: 03.08.2018 DE 102018212990
(71) Anmelder: Robert Bosch GmbH, 70469 Stuttgart (DE)
(72) Erfinder: Boos, Edna, 71735 Eberdingen (DE); Tzivanakis, Stefanos, 71332 Waiblingen (DE)

(57) **Zusammenfassung**

Die Erfindung betrifft Verfahren zum Betreiben eines SCR-Systems, das eine Förderpumpe (51) und zumindest zwei Dosierventile (11, 12) aufweist, wobei in dem Fall, dass zumindest ein Dosierventil (12) fehlerfrei ist und die übrigen Dosierventile (11) fehlerbehaftet sind, die Dosierung einer Reduktionsmittellösung über das zumindest eine fehlerfreie Dosierventil (12) erfolgt.

## Beschreibung

Die vorliegende Erfindung betrifft ein Verfahren zum Betreiben eines SCR-Systems für den Fall, dass zumindest ein Dosierventil fehlerfrei ist und die übrigen Dosierventile fehlerbehaftet sind. Ferner betrifft die Erfindung ein Computerprogramm, das jeden Schritt des Verfahrens ausführt, wenn es auf einem Rechengerät abläuft, sowie ein maschinenlesbares Speichermedium, welches das Computerprogramm speichert. Schließlich betrifft die Erfindung ein elektronisches Steuergerät, welches eingerichtet ist, das erfindungsgemäße Verfahren auszuführen.

### Stand der Technik

Heutzutage werden zur Reduktion von Stickoxiden (NOx) im Abgas von Verbrennungsmotoren in Kraftfahrzeugen unter anderem SCR-Katalysatoren verwendet. Die DE 103 46 220 A1 beschreibt das grundlegende Prinzip der SCR (Selective Catalytic Reduction). Hierbei werden Stickoxidmoleküle, die sich auf einer SCR-Katalysatoroberfläche befinden, bei Vorhandensein von Ammoniak (NH3) als Reduktionsmittel, zu elementarem Stickstoff reduziert. Das Reduktionsmittel wird in Form einer Harnstoff-Wasser-Lösung, aus der Ammoniak abgespalten wird, kommerziell auch als AdBlue® bekannt, bereitgestellt. Eine Förderpumpe fördert die Reduktionsmittellösung aus einem Reduktionsmitteltank über eine Druckleitung zu zumindest einem Dosiermodul. Das Dosiermodul weist ein Dosierventil auf, über welches die Reduktionsmittellösung dann stromaufwärts des SCR-Katalysators in einen Abgasstrang eindosiert wird. Die Steuerung der Eindosierung erfolgt in einem elektronischen Steuergerät, in dem Dosierstrategien für den Betrieb des SCR-Systems hinterlegt sind.

Heutzutage werden in SCR-Systemen oftmals mehrere Dosierventile verwendet, über welche Reduktionsmittellösung in den Abgasstrang eindosiert wird, wobei die Dosierventile in der Regel unterschiedlichen SCR-Katalysatoren zugeordnet sind. Typischerweise sind die mehreren Dosierventile über zumindest einen gemeinsamen Teil einer Druckleitung mit derselben Förderpumpe verbunden, welche die Reduktionsmittellösung für alle Dosierventile bereitstellt. Es ist somit nicht möglich, die geförderte Masse eindeutig nur einem Dosierventil zuzuordnen.

Die DE 10 2012 218 092 A1 beschreibt ein Verfahren zur Funktionsüberwachung wenigstens eines Dosierventils. Die Reduktionsmittellösung wird mittels der Förderpumpe und des wenigstens einen Dosierventil getaktet dosiert. Dabei wird der Druck bei der Ansteuerung des Dosierventils erfasst und mittels eines adaptiven Filters ausgewertet. Daraufhin wird ein Vergleich dieser mittels des adaptiven Filters ausgewerteten Druckwerte und erwarteter Vergleichsdaten durchgeführt. Schließlich wird auf Grundlage dieses Vergleichs ein Fehler im Dosierventil und/oder bei der dosierten Masse der Reduktionsmittellösung festgestellt.

### Offenbarung der Erfindung

Es wird ein Verfahren zur Betreiben eines SCR-Systems, das eine Förderpumpe und zumindest zwei Dosierventile aufweist, aufgezeigt. Die Förderpumpe fördert Reduktionsmittellösung über eine Druckleitung zu den zumindest zwei Dosierventilen. Jedem Dosierventil kann dabei ein SCR-Katalysators zugeordnet sein. Die Dosierventile dosieren die Reduktionsmittellösung dann in einen Abgasstrang ein und zwar vorzugsweise stromaufwärts des dazugehörigen SCR-Katalysators. In SCR-Katalysatoren wird dann Stickoxid im Abgasstrang mittels Ammoniak, welches sich aus der eindosierten Reduktionsmittellösung abspaltet, umgewandelt.

Das Verfahren ist für den Fall geeignet, in dem von den zumindest zwei Dosierventilen zumindest ein Dosierventil fehlerfrei ist und die übrigen fehlerbehaftet sind. Ein "fehlerbehaftetes Dosierventil" bedeutet, dass das Dosierventil einen Defekt aufweist oder ein fehlerhaftes Volumen bzw. eine fehlerhafte Masse der Reduktionsmittellösung eindosiert. Dies kann beispielsweise aufgrund einer klemmenden Ventilnadel oder eines Kurzschlusses vorkommen. Der Defekt wird auf an sich bekannte Art erkannt. In diesem Störfall erfolgt die Dosierung der Reduktionsmittellösung über das zumindest eine fehlerfreie Dosierventil. Folglich wird das zumindest eine fehlerfreie Dosierventil in Dosierbereitschaft versetzt oder, wenn es sich bereits in Dosierbereitschaft befindet, nicht abgestellt. Dadurch wird auch im Falle eines Defekts der Dosierbetrieb so lange wie möglich aufrechterhalten. Dabei wird eine signifikante, wenn auch nicht optimale Umsetzung der Stickoxide erreicht.

Da sich typischerweise die Veränderung der eindosierte Dosiermasse der Reduktionsmittellösung aufgrund des Defekts nicht direkt ableiten lässt, kommt es bei der Dosierung über die fehlerbehafteten Dosierventile zu Ungenauigkeiten und es kann zu viel oder zu wenig Reduktionsmittel eindosiert werden, ohne die genaue Dosiermasse zu kennen. Daher erfolgt im Störfall vorzugsweise keine Dosierung über die fehlerbehafteten Dosierventile, auch wenn eine Dosieranforderung für diese Dosierventile vorliegt.

Ein Aspekt sieht vor, das zumindest eine fehlerfreie Dosierventil mit einer Dosierstrategie zu betreiben, die der Dosierstrategie entspricht, bei der alle Dosierventile voll funktionsfähig sind. Die Dosierstrategie für das zumindest eine fehlerfreie Dosierventil wird also nicht geändert, auch wenn zumindest eines der weiteren Dosierventile defekt ist. Dies bietet den Vorteil, dass die Masse von Ammoniak, welche den SCR-Katalysator passiert, ohne mit Stickoxid zu reagieren - auch Ammoniak-Schlupf genannt-, im Vergleich zu dem Fall, bei dem alle Dosierventile voll funktionsfähig sind, gleich bleibt.

Ein weiterer Aspekt sieht vor, das zumindest eine fehlerfreie Dosierventil durch einen höheren Ammoniak-Sollfüllstand des zugehörigen SCR-Katalysators mit einer Überdosierung zu betreiben, bei der im Vergleich zu der Dosierstrategie, bei der alle Dosierventile voll funktionsfähig sind, mehr Reduktionsmittellösung über das fehlerfreie Dosierventil eindosiert wird. Es wird also die Dosierstrategie für das zumindest eine fehlerfreie Dosierventil geändert und eine größere Masse der Reduktionsmittellösung eindosiert, die insbesondere über der maximalen Ammoniak-Speicherfähigkeit des jeweils zugehörigen SCR-Katalysators liegt, sodass der zugehörige SCR-Katalysator die eindosierte Reduktionsmittellösung nicht vollständig umsetzt. Ein Ziel ist es, den SCR-Katalysator mit einer höheren Effizienz zu betreiben. Für den Fall, dass das zumindest eine fehlerfreie Dosierventil nicht dem als letzten auf das Abgas einwirkenden SCR-Katalysator zugeordnet ist und zumindest ein fehlerhaftes Dosierventil einem SCR-Katalysator, der stromabwärts dieses SCR-Katalysators angeordnet ist, zugeordnet ist, kann der Ammoniak-Sollfüllstand zumindest eines SCR-Katalysators, der dem zumindest einen fehlerfreien Dosierventil zugeordnet ist, derart gewählt werden, dass dieser physikalisch nicht erreicht werden kann. Dadurch wird ein weiteres Ziel erreicht, dass Ammoniak-Schlupf stromabwärts des zugeordneten SCR-Katalysators auftritt, der durch die stromabwärts angeordneten SCR-Katalysatoren, insbesondere durch den SCR-Katalysator, der dem fehlerhaften Dosierventil zugeordnet ist, aufgenommen wird und dort zur SCR beiträgt. Dies bietet den Vorteil, dass der SCR-Katalysator mit einem höheren Ammoniak-Füllstand betrieben wird, wodurch die Umsetzung von Stickoxiden für das zumindest eine fehlerfreie Dosierventil im Vergleich zu der Dosierstrategie, bei der alle Dosierventile voll funktionsfähig sind, signifikant höher ausfällt, d. h. mehr Stickoxid reduziert wird.

Vorteilhafterweise erfolgt die Dosierung der Reduktionsmittellösung über das zumindest eine fehlerfreie Dosierventil nur dann, wenn sich die zugehörigen SCR-Katalysatoren in einem Zustand befinden, in dem sie die eindosierte Reduktionsmittelösung umsetzen können. Mögliche Gründe dafür, dass der SCR-Katalysator die eindosierte Reduktionsmittellösung nicht umsetzen kann, sind beispielsweise, dass die maximale Ammoniak-Speicherfähigkeit des SCR-Katalysators erreicht ist, dass der SCR-Katalysator einen Defekt auf weist, und/oder dass der SCR-Katalysator schlicht nicht eingerichtet ist, eine entsprechend große Masse der Reduktionsmittellösung umzusetzen. Können die SCR-Katalysatoren die eindosierte Reduktionsmittellösung nicht umsetzen, so entsteht Ammoniak-Schlupf, der durch diese Maßnahme verhindert werden kann. Dies ist von besonderer Bedeutung, wenn der hier betrachtete zugehörige SCR-Katalysator als hinterster im Abgasstrang angeordnet ist und somit kein weiterer SCR-Katalysator mehr stromabwärts folgt, der den Ammoniak-Schlupf auffangen könnte.

Das Computerprogramm ist eingerichtet, jeden Schritt des Verfahrens durchzuführen, insbesondere, wenn es auf einem Rechengerät oder Steuergerät durchgeführt wird. Es ermöglicht die Implementierung des Verfahrens in einem herkömmlichen elektronischen Steuergerät, ohne hieran bauliche Veränderungen vornehmen zu müssen. Hierzu ist es auf dem maschinenlesbaren Speichermedium gespeichert.

Durch Aufspielen des Computerprogramms auf ein herkömmliches elektronisches Steuergerät, wird das elektronische Steuergerät erhalten, welches eingerichtet ist, ein SCR-System im beschriebenen Störfall zu betreiben.

### Kurze Beschreibung der Zeichnungen

Ausführungsbeispiele der Erfindung sind in den Zeichnungen dargestellt und in der nachfolgenden Beschreibung näher erläutert.
Figur 1 zeigt eine schematische Darstellung eines SCR-Systems mit zwei Dosierventilen, wobei das stromaufwärts angeordnete Dosierventil defekt ist, und wobei das SCR-System mittels einer Ausführungsform des erfindungsgemäßen Verfahrens gesteuert wird.
Figur 2 zeigt eine schematische Darstellung des SCR-Systems mit zwei Dosierventilen, wobei das stromabwärts angeordnete Dosierventil defekt ist, und wobei das SCR-System mittels einer Ausführungsform des erfindungsgemäßen Verfahrens gesteuert wird.

### Ausführungsbeispiele der Erfindung

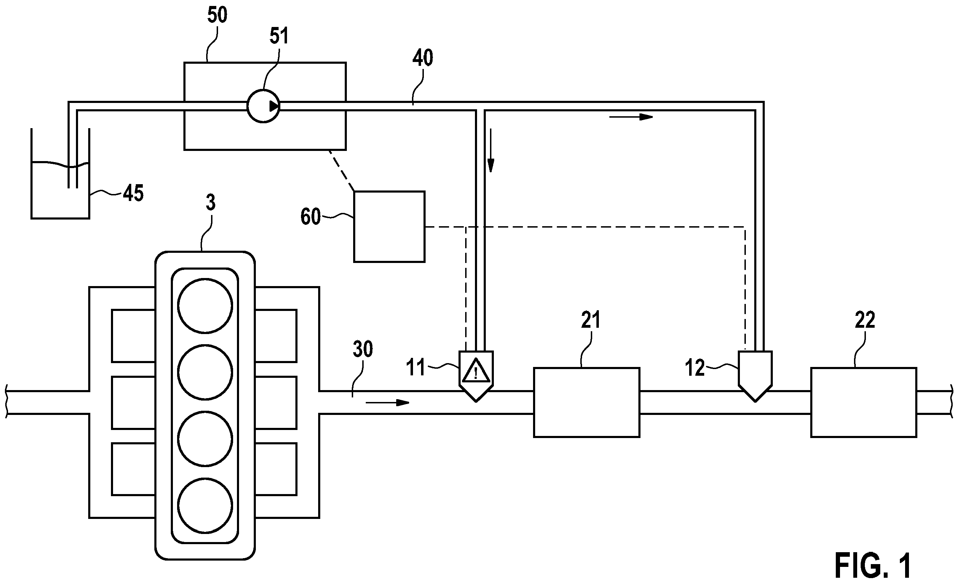

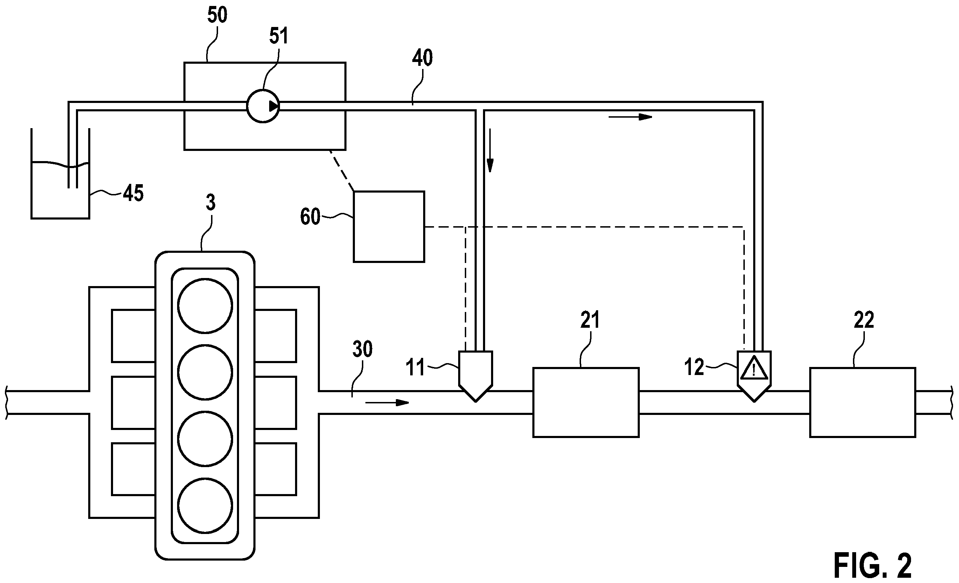

Die Figuren 1 und 2 zeigen jeweils in einer schematischen Darstellung ein SCR-System mit zwei Dosierventile 11, 12 und zwei SCR-Katalysatoren 21, 22, die den Dosierventilen 11, 12 zugeordnet sind, in einem gemeinsamen Abgasstrang 30 einer Verbrennungsmaschine 3. Das erste Dosierventil 11 ist direkt stromabwärts der Verbrennungsmaschine 3 angeordnet und wird auch "vorderes Dosierventil" genannt. Dem ersten Dosierventil 11 ist stromabwärts nachfolgend der erste SCR-Katalysator 21 angeordnet, der auch als "motornaher SCR-Katalysator" bezeichnet wird. Über das erste Dosierventil 11 wird eine Reduktionsmittellösung stromaufwärts des ersten SCR-Katalysators 21 in den Abgasstrang 30 eindosiert. Das zweite Dosierventil 12 ist stromabwärts des ersten SCR-Katalysators 21 und damit auch stromabwärts des ersten Dosierventils 11 angeordnet und wird auch "hinteres Dosierventil" genannt. Dem zweiten Dosierventil 12 ist stromabwärts nachfolgend der zweite SCR-Katalysator 22 angeordnet, der auch als "Unterflur-SCR-Katalysator" bezeichnet wird. Gleichermaßen wird über das zweite Dosierventil 12 die Reduktionsmittellösung stromaufwärts des zweiten SCR-Katalysators 22 eindosiert. Darüber hinaus sind die Dosiermodule 11, 12 über eine Druckleitung 40 mit einem Fördermodul 50 verbunden, das eine Förderpumpe 51 aufweist, welche die Reduktionsmittellösung aus einem Reduktionsmitteltank 45 durch die Druckleitung 40 zu den Dosierventilen 11, 12 fördert. Ferner ist ein elektronisches Steuergerät 60 vorgesehen, welches zumindest mit dem Fördermodul 50 bzw. der Förderpumpe 51 sowie mit den beiden Dosierventilen 11, 12 verbunden ist und diese ansteuern kann. Das elektronische Steuergerät 60 ist eingerichtet, ein fehlerhaftes Dosierventil 11, 12 zu erkennen. Um sich nicht vom Kern der Erfindung zu entfernen, sind Komponenten, die zum Erkennen eines Fehlers bzw. eines Defekts verwendet werden, in den Figuren nicht dargestellt.

In Figur 1 ist ein Störfall dargestellt, bei dem das erste Dosierventil 11 fehlerhaft ist, das zweite Dosierventil 12 allerdings fehlerfrei und voll funktionsfähig ist. Auch wenn für dieses erste Dosierventil 11 gemäß der Dosierstrategie eine Dosieranforderung vorliegt, wird es dennoch nicht angesteuert, sodass im Störfall über das erste Dosierventil 11 keine Dosierung erfolgt. Das zweite Dosierventil 12 kann gemäß einer der beiden folgenden Ausführungsformen des erfindungsgemäßen Verfahrens angesteuert werden. Eine erste Ausführungsform sieht vor, das fehlerfreie zweite Dosierventil 12 mit einer Dosierstrategie zu betreiben, die der Dosierstrategie entspricht, bei der alle Dosierventile 11, 12 voll funktionsfähig sind. Folglich wird dem zweiten SCR-Katalysator 22 die gleiche Masse der Reduktionsmittellösung zu Verfügung gestellt wie im Fall voll funktionsfähiger Dosierventile 11, 12. Im Detail wird die Füllstandsregelung und die Berechnung einer Vorsteuermenge für diesen zweiten Katalysator 22 in gleicher Weise wie im Fall voll funktionsfähiger Dosierventile 11, 12 durchgeführt. In dieser Ausführungsform ist der Umsatz der Stickoxide zwar nicht optimal, aber dennoch signifikant hoch. Gleichzeitig kann sichergestellt werden, dass Ammoniak-Schlupf durch den zweiten SCR-Katalysator 22, welcher dann ungehindert den Abgasstrang 30 verlassen könnte, nicht auftritt.

In einer zweiten Ausführungsform wird das zweite Dosierventil 12 mit Überdosierung betrieben, bei der im Vergleich zu der Dosierstrategie, bei der alle Dosierventile 11, 12 voll funktionsfähig sind, mehr Reduktionsmittellösung eindosiert wird, sodass der zweite SCR-Katalysator 22 mit einem höheren Ammoniak-Füllstand betrieben wird. Dadurch weist der zweite SCR-Katalysator 22 eine höhere Effizienz auf und mehr Stickoxid wird umgesetzt. Der Verlust der Konvertierung durch den ersten SCR-Katalysator 21 kann dadurch zumindest teilweise kompensiert werden. Dabei kann Ammoniak-Schlupf durch den zweiten SCR-Katalysator 22 entstehen.

In beiden Ausführungsformen wird auf eine Dosierung des zweiten Dosierventils 12 verzichtet, wenn sich der zweite SCR-Katalysator 22 nicht in einem Zustand befindet, in dem er die eindosierte Reduktionsmittelösung umsetzen kann. Der Zustand wird beispielsweise nicht erreicht, wenn die maximale Ammoniak-Speicherfähigkeit des SCR-Katalysators, die vor allem von der Temperatur des zweiten SCR-Katalysators 22 abhängt, erreicht ist, wenn der zweite SCR-Katalysator 22 einen Defekt aufweist, und/oder wenn der zweite SCR-Katalysator 22 schlicht nicht eingerichtet ist, eine entsprechend große Masse der Reduktionsmittellösung umzusetzen. Dadurch wird Ammoniak-Schlupf durch den zweiten SCR-Katalysator 22 vor allem bei der zweiten Ausführungsform verhindert.

In Figur 2 ist ein Störfall dargestellt, bei dem das zweite Dosierventil 12 fehlerhaft ist, das erste Dosierventil 11 allerdings fehlerfrei und voll funktionsfähig ist. Auch wenn für dieses zweite Dosierventil 12 gemäß der Dosierstrategie eine Dosieranforderung vorliegt, wird es dennoch nicht angesteuert, sodass im Störfall über das zweite Dosierventil 12 keine Dosierung erfolgt. Das erste Dosierventil 11 kann gemäß einer der beiden folgenden Ausführungsformen des erfindungsgemäßen Verfahrens angesteuert werden, die im Wesentlichen der ersten bzw. der zweiten Ausführungsform entsprechen.

Für eine detaillierte Beschreibung der dritten und der vierten Ausführungsform wird auf die vorstehende Beschreibung der ersten bzw. der zweiten Ausführungsform verwiesen. Die dritte Ausführungsform sieht vor, das fehlerfreie erste Dosierventil 11 mit einer Dosierstrategie zu betreiben, die der Dosierstrategie entspricht, bei der alle Dosierventile 11, 12 voll funktionsfähig sind. Bei dieser Ausführungsform wird im Wesentlichen nur der erste SCR-Katalysator 21 mit Reduktionsmittellösung versorgt, sodass die Umsetzung der Stickoxide fast ausschließlich über den ersten SCR-Katalysator 21 erfolgt. Der Ammoniak-Schlupf durch den ersten SCR-Katalysator 21 bleibt im Vergleich zu dem Fall voll funktionsfähiger Dosierventile 11, 12 gleich. Im Gegensatz zur ersten Ausführungsform, bei der in der Dosierstrategie kein Ammoniak-Schlupf durch den zweiten SCR-Katalysator 22 vorgesehen ist, kann in der dritten Ausführungsform bereits in der Dosierstrategie, bei der alle Dosierventile 11, 12 funktionsfähig sind, Ammoniak-Schlupf durch den ersten SCR-Katalysator 21 vorgesehen sein, da dieser beispielsweise vom zweiten SCR-Katalysator 22 aufgefangen werden kann. Allerdings kann dieser Ammoniak-Schlupf durch den ersten SCR-Katalysator 21 als vergleichsweise klein angesehen werden, da der erste SCR-Katalysator 21 mit hoher Effizienz nahe dem Effizienz-Limit arbeitet, d. h. einen hohen Ammoniak-Füllstand aufweist und demnach viel Stickoxid umsetzt.

Bei der vierten Ausführungsform wird das erste Dosierventil 11 mit Überdosierung betrieben. Wie in Bezug auf die zweite Ausführungsform bereits beschrieben, kann dadurch hoher Ammoniak-Schlupf entstehen. Der Ammoniak-Schlupf durch den ersten SCR-Katalysator 21 kann dabei durch den zweiten SCR-Katalysator 22 aufgefangen werden und dort dann zur Umsetzung der Stickoxide verwendet werden.

Auch hier kann auf eine Dosierung des ersten Dosierventils 11 verzichtet werden, wenn sich der erste SCR-Katalysator 21 und der zweite SCR-Katalysator 22 nicht in einem Zustand befindet, in dem sie die eindosierte Reduktionsmittelösung umsetzen können, allerdings nicht, wenn sich nur der erste SCR-Katalysator 21 nicht in einem Zustand befindet, in dem er die eindosierte Reduktionsmittelösung umsetzen kann, der zweite SCR-Katalysator 22 hingegen wie beschrieben den Ammoniak-Schlupf aufnehmen kann.

In weiteren, nicht gezeigten Ausführungsformen können mehrere Dosierventile (mehr als zwei) und/oder mehrere Katalysatoren vorgesehen sein.

## Patentansprüche

1. Verfahren zum Betreiben eines SCR-Systems, das eine Förderpumpe (51) und zumindest zwei Dosierventile (11, 12) aufweist, **dadurch gekennzeichnet, dass** in dem Fall, dass zumindest ein Dosierventil (12; 11) fehlerfrei ist und die übrigen Dosierventile (11; 12) fehlerbehaftet sind, die Dosierung einer Reduktionsmittellösung über das zumindest eine fehlerfreie Dosierventil (12; 11) erfolgt.

2. Verfahren nach einem der vorhergehenden Ansprüche, **dadurch gekennzeichnet, dass** keine Dosierung über die fehlerbehafteten Dosierventile (11; 12) erfolgt.

3. Verfahren nach Anspruch 1 oder 2, **dadurch gekennzeichnet, dass** das zumindest eine fehlerfreie Dosierventil (12; 11) mit einer Dosierstrategie betrieben wird, die der Dosierstrategie, bei der alle Dosierventile (11, 12) voll funktionsfähig sind, entspricht.

4. Verfahren nach Anspruch 1 oder 2, **dadurch gekennzeichnet, dass** das zumindest eine fehlerfreie Dosierventil (12; 11) mit einer Überdosierung betrieben wird.

5. Verfahren nach einem der vorhergehenden Ansprüche, **dadurch gekennzeichnet, dass** die Dosierung der Reduktionsmittellösung über das zumindest eine fehlerfreie Dosierventil (12; 11) nur dann erfolgt, wenn sich zugehörige SCR-Katalysatoren (21, 22) in einem Zustand befinden, in dem sie die eindosierte Reduktionsmittelösung umsetzen können.

6. Computerprogramm, welches eingerichtet ist, jeden Schritt des Verfahrens nach einem der Ansprüche 1 bis 5 durchzuführen.

7. Maschinenlesbares Speichermedium, auf welchem ein Computerprogramm nach Anspruch 6 gespeichert ist.

8. Elektronisches Steuergerät (60), welches eingerichtet ist, um mittels eines Verfahrens nach einem der Ansprüche 1 bis 5 ein SCR-System zu betreiben.
